# DEMANDE DE BREVET EUROPEEN

(11) **EP 1 676 884 A1**
(43) Date de publication de la demande: **05.07.2006**
(21) Numéro de dépôt: 04293175.8
(22) Date de dépôt: 30.12.2004
(51) Int. Cl.: C08L 23/14

(54) **Composition polyolefinique destinee a realiser un capot pour logement d'un coussin d'air de securite d'un vehicule automobile**

(71) Demandeur: Multibase S.A.S., 38380 Saint Laurent du Pont (FR)
(72) Inventeur: Von Tschammer, Alexis, 38000 Grenoble (FR)
(74) Mandataire: Gaucherand, Michel

(57) **Abrégé**

L'invention concerne une composition polyoléfinique thermoplastique élastomérique partiellement réticulée, pour la formation de pièces de type insert en particulier de capot pour le logement d'un coussin d'air de sécurité d'un véhicule automobile, ladite composition comprenant un polymère oléfinique à base de propylène, au moins un copolymère à base d'éthylène de type éthylène-alpha-oléfine, au moins un agent réticulant et un agent générateur de radicaux libres, qui se caractérise en ce que :
e) le au moins un polymère oléfinique à base de propylène est choisi dans le groupe des copolymères de propylène/éthylène ou propylène/alpha-oléfine, et sélectionné parmi ceux ayant une résistance à l'impact d'au moins 30 kJ/m² lorsque mesuré suivant l'Izod entaillé à 23 °C, selon la norme ISO 180,
f) le au moins un copolymère à base d'éthylène de type éthylène-alpha-oléfine est sélectionné dans le groupe constitué par ceux ayant une densité au plus égale à 0,870 g/cm3, selon la norme ISO 1183,
g) au moins un élastomère thermoplastique est introduit,
h) éventuellement un polyéthylène haute densité est introduit.

## Description

### DOMAINE DE L'INVENTION

L'invention concerne une composition polyoléfinique thermoplastique, permettant de réaliser des pièces et des composants devant résister à des chocs à basse température.

L'invention concerne plus particulièrement une composition polyoléfinique thermoplastique élastomérique partiellement réticulée destinée à être transformée par toute technique de la plasturgie, mais en particulier par injection, en une pièce moulée telle que par exemple un capot pour logement d'un coussin d'air de sécurité d'un véhicule automobile.

Une telle pièce moulée est plus particulièrement destinée à servir de capot venant s'insérer dans la colonne de direction ou sur une planche de bord ou sur un panneau de portières ou toute autre zone d'un véhicule automobile pouvant accueillir un dispositif de sécurité active tel que un coussin d'air de sécurité.

Quand cette pièce moulée est en particulier un capot pour logement d'un coussin d'air de sécurité de géométrie appropriée, ce capot doit répondre à de multiples exigences.

Ce capot doit tout d'abord pouvoir être injecté à des cadences élevées, et sous des taux de cisaillement importants provoqués par la géométrie très particulière de cette pièce.

Or, l'obtention de cadences élevées requiert différents niveaux de performance pour la composition thermoplastique destinée à la formation du capot, telle qu'une fluidité sous différents taux de cisaillement, en particulier pour l'étape de remplissage du moule, mais aussi, une absence de collage dans le moule qui pourrait perturber l'éjection de la pièce une fois réalisée.

En effet, une zone d'affaiblissement ou de moindre résistance, est prévue sur la face interne de la paroi de ce capot, cette zone ayant la forme d'un « H », d'un « I », d'un « Y » ou d'un « U » et destinée à s'ouvrir facilement lors du déploiement d'un coussin d'air de sécurité, à la suite d'un choc subi par le véhicule.

Cette zone de moindre résistance a généralement l'aspect d'une ligne de rupture ou d'une encoche, et résulte le plus souvent d'un amincissement de l'épaisseur du côté interne dudit capot, par exemple à l'aide d'un couteau chaud ou d'un laser. Mais cette zone d'encoche, de moindre épaisseur et dès lors de moindre résistance, peut être obtenue directement lors du moulage par injection, un tel amincissement constituant bien évidemment, par la forme du moule, une obstruction au passage de la composition thermoplastique fondue : les épaisseurs de cette zone de moindre résistance peuvent varier de 0,1 à 1,0 millimètre alors que l'épaisseur de la paroi du capot est de l'ordre de la dizaine de millimètres.

Ce capot doit aussi présenter une certaine rigidité pour permettre son montage sur le volant de direction par exemple.

Ce capot doit de plus être considéré comme une pièce dite d'aspect par son état de surface. En général, une peinture est appliquée sur le capot dans le but de masquer les défauts d'ordre esthétique qui peuvent potentiellement apparaître sur la surface de la pièce injectée. Ces défauts peuvent être le résultat de variation de brillance ou peuvent révéler la présence de lignes d'écoulement de la composition thermoplastique fondue. Ces défauts visuels résultent de l'injection elle-même, en particulier au niveau des lignes de rupture, et ce, malgré l'optimisation des flux de la composition thermoplastique et des points d'injection. Cependant cette même composition thermoplastique peut également être utilisée pour des applications qui ne seront pas peintes ultérieurement et il sera alors beaucoup plus difficile d'obtenir un bon aspect de la surface externe sans ce revêtement de peinture.

En outre, ce capot malgré la présence de cette zone de moindre résistance doit pouvoir conserver sur le long terme, en dépit des variations de température de l'habitacle du véhicule, un aspect décoratif, des surfaces lisses et souples et des propriétés mécaniques suffisantes pour ne pas s'altérer, notamment se déformer ou s'étirer ou bien se fendiller.

Enfin, les conditions de performance du capot lors de l'utilisation et du fonctionnement d'un coussin d'air de sécurité d'un véhicule automobile sont particulièrement critiques. Chaque conception de capot tel qu'il est architecturé par les équipementiers et les constructeurs automobiles, est différente voire unique. Mais dans les pratiques les plus extrêmes, la composition thermoplastique constitutive de cette pièce injectée doit résister à une variation importante de température effective, de -35 °C jusqu'à + 85°C sans s'altérer. En conséquence, une telle variation possible de températures subies implique que les capots à tester soient effectivement placés dans ces conditions de températures et qu'ils soient testés à ces températures extrêmes normalisées. Pour ce faire, les capots réalisés sont placés dans une chambre de conditionnement aux températures mentionnées ci-dessus : lorsque le capot a bien atteint ces températures, il est alors testé en conditions réelles pour vérifier son bon fonctionnement. Ce bon fonctionnement implique qu'aucun morceau de plastique ne se détache lors du test d'ouverture du coussin d'air de sécurité (explosion), car il est à craindre qu'un éclat non contrôlé vienne blesser l'occupant du véhicule. Dès lors, le capot doit se détacher par déchirure contrôlée dans la zone de moindre résistance et libérer le coussin d'air dans la zone prévue à cet effet, l'ouverture s'opérant de manière prédéterminée car il s'agit de contrôler cette ouverture pour s'assurer que le coussin se déploie dans un intervalle de temps précis et bref sans risque pour l'occupant du véhicule, ni trop rapidement, ni trop lentement.

Quand le véhicule vient frapper un obstacle, avec une force d'impact suffisante pour provoquer le déploiement du coussin d'air, l'insert, qui fait office de capot, doit s'ouvrir en quelques millisecondes, et ce, par rupture des encoches conçues à cet effet et parties intégrantes de la pièce moulée.

Pendant l'ouverture, le capot joue tout à d'abord un rôle important en maintenant le mécanisme d'ouverture du coussin d'air tout en restant solidaire pour partie du volant, s'il s'agit d'un capot recouvrant le coussin d'air de sécurité coté conducteur ou en assurant l'intégrité du maintien de la portière, s'il s'agit de la plaque recouvrant le coussin d'air de sécurité sur les cotés du véhicule puis libère ledit coussin d'air.

L'analyse de tous ces impératifs techniques qui se révèlent lors de l'ouverture du coussin d'air de sécurité conduit à affirmer que le capot qui recouvre le logement du dispositif de sécurité doit présenter une bonne résistance à l'impact, aussi bien à basses températures qu'à hautes températures et bénéficier d'une franche rupture ductile. En outre, les exigences de sécurité de plus en plus sévères font que toutes les performances exigées pour un coussin d'air de sécurité le sont, en particulier, pour des températures de plus en plus basses.

Par ailleurs et à long terme, sous l'effet répété des variations thermiques auxquelles l'habitacle d'un véhicule est soumis, le capot peut perdre sa souplesse et se fragiliser, en particulier au niveau de la ligne de rupture.

Les essais de tenue thermique sont généralement conduits durant 400 heures à 107 °C par exemple et cela en fonction des constructeurs afin d'avoir la certitude sur la tenue à 85 °C.

Des essais accélérés simulant 10 ans de vieillissement représentant un cycle de vie complet sont bien connus dans l'état de la technique, pour tester des pièces moulées en particulier des capots destinés à l'habitacle de véhicules automobiles.

Enfin d'autres tests permettent de vérifier la capacité de résistance chimique, de résistance aux rayonnements ultraviolet, les comportements aux risques de changements de teintes, ainsi que maîtriser les risques d'exsudation de matières organiques volatiles contenues dans la composition thermoplastique mise en oeuvre dans le moulage des pièces d'habitacle qui par une élévation de température, se volatilisent et viennent se condenser sur le pare-brise.

### ETAT DE LA TECHNIQUE

Des compositions permettant de réaliser des capots pour le logement d'un coussin d'air de sécurité d'un véhicule automobile, notamment par injection, sont déjà connues.

Pour les applications où les températures de test sont effectivement inférieures à -35 °C, la majorité de ces compositions sont de- type élastomère thermoplastique et plus précisément sont des copolyesters.

Toutefois, des considérations de coûts font que les compositions majoritairement polyoléfiniques sont préférées aujourd'hui.

Le document US 6,087,431 décrit une composition oléfinique élastomérique thermoplastique, obtenue à partir d'un mélange constitué par :
- (i): 100 parts en poids d'un élastomère oléfinique comportant de l'éthylène et au moins une alpha-oléfine ayant de 6 à 12 atomes de carbone et ayant un rapport de copolymérisation d'alpha-oléfine de 20 à 30% en poids, une densité de 0,8 à 0,9 g/cm3 et une distribution de poids moléculaire (Mw/Mn) de moins de 3,0, lorsque déterminée par les techniques de chromatographie par perméation en phase gel,
- (ii): 5 à 90 parts en poids d'un polymère de propylène, et
- (iii): 5 à 250 parts en poids d'une huile pour caoutchouc, le mélange étant réticulé par un initiateur de radicaux ou par le mélange d'un initiateur de radicaux libres et d'un promoteur de réticulation.

Toutefois, une telle composition pourrait ne plus satisfaire aux exigences nouvelles d'absence de composants organiques volatiles qui ont capacité à exsuder à la surface de l'objet moulé à partir de cette composition, lors de séjours prolongés à des températures élevées, comme c'est le cas pour une voiture exposée en plein soleil, et à se déposer, par sublimation, sur le pare-brise en altérant sa transparence.

Le document WO0224803 décrit une composition élastomérique thermoplastique à rhéologie modifiée, obtenue à partir d'un mélange constitué par au moins une première polyoléfine à caractère élastomérique de type copolymère d'éthylène et d'alpha-oléfine, d'une deuxième polyoléfine de type polypropylène homopolymère ou copolymère d'éthylène-propylène, associées à un agent de réticulation de type peroxyde et à un coagent de type formateur de radicaux libres, composition soumise à un malaxage à chaud afin d'en améliorer les caractéristiques viscoélastiques, en particulier sa rhéologie.

Le système réticulant ou vulcanisant principal présent dans la composition, est effectivement accompagné par un système secondaire agissant comme coupeur de chaînes du composant polypropylène, et ce, afin d'obtenir des comportements de mise en oeuvre satisfaisants pour une telle composition, en particulier lors de la mise en oeuvre de procédés tels que l'extrusion de feuilles et le thermoformage.

Eventuellement, d'autres ajouts sont possibles dans cette composition élastomérique, en particulier, des ajouts de charges minérales, de stabilisants, de plastifiants, d'agents gonflants ou autres, selon les types de pièces à obtenir, les normes à satisfaire et les cahiers des charges à respecter.

Cette composition offre l'avantage de pouvoir être mise en oeuvre facilement, y compris par injection et en particulier lorsque les parois de l'objet à mouler, par injection, sont particulièrement minces, permettant à cette pièce une fois moulée de présenter un bon aspect de surface, sans risque de manifester un effet collant dans le moule qui affecterait les cadences de fabrication.

Toutefois, une telle composition formulée pour obtenir la rigidité nécessaire et aussi pour satisfaire le cahier des charges concernant le capot pour coussin d'air de sécurité réalisé avec ladite composition, n'est pas adaptée à des situations de performance d'utilisation tout à fait spécifiques, puisqu'elle ne permet pas de réaliser des pièces qui puissent passer les tests les plus critiques de résistance au choc entaillé à -45 °C.

Dès lors, l'invention a pour but de pallier les inconvénients évoqués précédemment en proposant une composition thermoplastique permettant d'obtenir une pièce moulée par injection, ayant un excellent aspect de surface, manifestant une augmentation significative des performances de la résistance au choc entaillé à froid, c'est à dire de présenter une rupture ductile, mais une rupture tout de même, mais sans perte de module de rigidité, de tenue aux hautes températures, de facilité de mise en oeuvre, en particulier de cadence d'injection et sans risque d'adhésion sur les parois d'un moule.

### OBJETS DE L'INVENTION

L'invention a pour premier objet la création d'une composition polyoléfinique destinée à être transformée par toute technique de la plasturgie, mais préférentiellement par moulage par injection, en une pièce de type insert en particulier un capot pour le logement d'un coussin d'air de sécurité d'un véhicule automobile, devant résister à un impact à basse température ciblée à -45 °C sans pour autant se fragmenter, c'est à dire présenter une rupture de type ductile, tout en maintenant son intégrité à haute température.

L'invention a pour autre objet la création d'une composition polyoléfinique thermoplastique élastomérique partiellement réticulée, destinée à la réalisation d'une pièce de type insert, en particulier un capot remplissant intégralement le cahier des charges des constructeurs automobiles, en particulier devant résister à des températures de 107 °C, présentant un module de rigidité élevé, sans sacrifier les caractéristiques de ductilité de rupture au choc entaillé à basse température.

L'invention a pour autre objet la création d'une composition polyoléfinique thermoplastique élastomérique partiellement réticulée, destinée à réaliser une pièce de type insert en particulier un capot ayant des propriétés d'aspect attrayantes, afin de permettre son utilisation éventuellement sans peinture, et plus particulièrement d'offrir une plage de mise en oeuvre par injection suffisamment large pour obtenir des pièces moulées libres de lignes d'écoulement de matière et de contraintes internes, des aspects de surface réguliers, des retraits homogènes, non mis en évidence par les cycles de températures en particulier lors de la mise en peinture, et ce, malgré des cadences de moulage élevées.

L'invention a pour autre objet la création d'une composition polyoléfinique thermoplastique élastomérique partiellement réticulée, pour la réalisation de pièces de type insert, en particulier un capot pouvant être mis en oeuvre à cadences de moulage élevées, c'est à dire avoir des durées de cycles faibles, résultant de temps d'injection et d'éjection faibles en aucune manière affectés par quelque risque de collage dans le moule.

### SOMMAIRE DE L'INVENTION

A cet effet, l'invention concerne une composition polyoléfinique thermoplastique élastomérique partiellement réticulée, destinée à être préalablement mise en oeuvre par toute technique de mélangeage à l'état fondu et sous effort de cisaillement, avant d'être transformée par les techniques de la plasturgie, et préférentiellement par moulage par injection en une pièce de type insert en particulier un capot pour le logement d'un coussin d'air de sécurité d'un véhicule automobile, ladite composition comprenant un polymère oléfinique à base de polypropylène, au moins un copolymère de type éthylène-alpha-oléfine, au moins un agent réticulant et un agent générateur de radicaux libres qui se caractérise en ce que
- a): le au moins un polymère oléfinique à base de polypropylène est choisi dans le groupe des copolymères de propylène/éthylène ou propylène/alpha-oléfine, et sélectionné parmi ceux ayant une résistance à l'impact d'au moins 30 kJ/m² lorsque mesuré suivant l'Izod entaillé à 23 °C, selon la norme ISO 180 ;
- b): le au moins un copolymère à base d'éthylène, de type éthylène-alpha-oléfine est sélectionné dans le groupe constitué par ceux ayant une densité au plus égale à 0,870 g/cm3, selon la norme ISO 1183 ;
- c): au moins un élastomère thermoplastique est ajouté ;
- d): éventuellement un polymère de type polyéthylène haute densité est ajouté.

### DESCRIPTION DETAILLEE DE L'INVENTION

Dès lors qu'un module de rigidité élevé pour la composition destiné à la réalisation d'une pièce de type insert et en particulier d'un capot doit être recherché, et qu'une résistance aux températures élévées et basses est nécessaire, différents types de polymères oléfiniques thermoplastiques à haut point de fusion peuvent être utilisés, tels que les polypropylènes sous leur forme homopolymères ou copolymères, mais dans la mesure où des performances de résistance au choc à froid doivent être associées : le choix s'oriente dès lors préférentiellement sur les copolymères de polypropylène et éventuellement sur des polymères oléfinique de type polyethylène haute densité qui sont également envisageables, bien qu'ayant des points de fusion inférieurs à celui du polypropylène.

Cependant, l'ajout - d'élastomères thermoplastiques s'avère indispensable pour s'approcher des besoins de faible dureté et de rupture ductile à basse température.

L'état de la technique enseigne que, parmi les polyoléfines, conduites à modifier la composante polypropylène de la composition, doivent être préférentiellement choisies celles ayant une faible cristallinité. En effet, le comportement viscoélastique et la souplesse du matériau polymère vont de pair, car ces deux propriétés sont liées à l'état cristallin, semi-cristallin ou amorphe dudit matériau polymère.

L'état de la technique enseigne également qu'une réticulation partielle accompagne la formation d'un réseau entre les parties cristallines et les parties amorphes, en modifiant également les longueurs de chaînes, en créant ainsi les conditions morphologiques pour obtenir un véritable élastomère thermoplastique. Cependant les performances de rupture ductile y compris à très basse température ne sont pas obtenues par cette seule approche.

Enfin, la modification des caractéristiques rhéologiques de telles compositions s'impose afin de cumuler fluidité et comportement de faible viscosité à haut taux de cisaillement, tout en maintenant une cohésion de la matière à l'état fondu. De telles caractéristiques sont souhaitées dans le but de préserver les propriétés d'aspects, celles-ci étant dépendantes des sensibilités à de trop fortes orientations des chaînes de polymère, lorsqu'elles sont soumises à de hauts taux de cisaillement à l'injection, puis à l'éventuelle libération des contraintes figées lors des cycles thermiques par exemple.

### Copolymère à base de polypropylène

Selon l'invention, le polymère de propylène constitue l'élément quantitatif principal de la composition oléfinique thermoplastique élastomérique partiellement réticulée.

Selon l'invention également, le polymère de propylène est un copolymère semi-cristallin isotactique de type bloc séquentiel ou de type aléatoire, dont les séquences sont constituées par du propylène et par de l'éthylène et/ou par des alpha-oléfines en C₄ à C₁₂ et préférentiellement le butène-1, le pentène-1, le hexène-1, l'octène-1, le méthyle pentène.

Le copolymère semi-cristallin est préférentiellement un copolymère de propylène et d'éthylène contenant de faibles quantités d'éthylène, généralement comprises entre 2% et 5% en poids.

Le copolymère de propylène-éthylène et/ou de propylène-alpha-oléfine, est sélectionné parmi ceux ayant une résistance à l'impact d'au moins 30 kJ/m² lorsque mesuré suivant l'Izod entaillé à 23 °C, selon la norme ISO 180.

Un homopolymère de propylène ne peut être envisagé de par sa faible résistance à l'impact à basse température.

L'indice de fluidité du copolymère de propylène-éthylène et/ou copolymère propylène-alpha-oléfine, selon la présente invention, est situé dans un intervalle de 0,1 à 100 g/10 minutes (sous une charge de 2,16 kilogrammes à 230 °C selon la norme ASTM 1238). De préférence, le copolymère choisi, à base de propylène a un indice de fluidité compris entre 0,5 et 50 g/10 minutes. Au-dessus de 50 g/10 minutes, la résistance thermique et la résistance mécanique de la composition thermoplastique élastomérique deviennent insuffisantes tandis qu'en dessous de 0,5 g/10 minutes la fluidité et la capacité de mise en oeuvre sont trop réduites.

Le copolymère choisi parmi ces copolymères à base de propylène est ajouté en proportion de 45% à 80% en poids, et de préférence de 50 à 70% en poids, par rapport à la composition totale formulée.

Dans la suite de cette description, tous les pourcentages en additifs divers, tels que autres composants de la composition, agents réticulant, coagents, agents stabilisants, charges, et autres additifs éventuels, sont tous donnés en % en poids par rapport à la composition complète.

En dessous de 45 % en poids, la fluidité et la capacité de mise en oeuvre de la composition, ainsi que sa rigidité sont trop fortement abaissées, tandis qu'au-dessus de 80% en poids, la flexibilité de composition est notoirement insuffisante, en particulier à basse température.

### Copolymère alpha oléfinique à base d'éthylène

Le copolymère éthylène-alpha-oléfinique selon l'invention, intervenant comme composant quantitativement second de la composition thermoplastique élastomérique partiellement réticulée est un copolymère comportant de l'éthylène comme comonomère majoritaire et au moins une alpha-oléfine ayant préférentiellement de 3 à 12 atomes de carbone comme comonomère secondaire.

Les alpha-oléfines ayant de 3 à 12 atomes de carbone incluent, par exemple, le butène, l'hexene-1, 4- le methylpentène-1, l'heptène-1, le octène-1, le nonène-1, le decène-1, le undécène-1, le dodécène-1.

D'autres comonomères réducteurs de cristallinité dits comonomères tertiaires peuvent être aussi utilisés dans la préparation du copolymère à base d'éthylène qui incluent l'obtention d'un copolymère d'éthylèrre-alpha-oléfine-comonomère tertiaire ou l'obtention d'un copolymère éthylène-comonomère tertiaire, ce dernier étant mis en oeuvre en mélange avec le copolymère éthylène-alpha-oléfine. Ce comonomère tertiaire est choisi dans le groupe constitué par l'acétate de vinyle, l'acide acrylique, l'acide méthacrylique, l'acrylate de méthyle, le méthacrylate de méthyle, l'acrylate d'éthyle, le méthacrylate d'éthyle.

Selon l'invention, sont préférentiellement choisis les copolymères oléfiniques de type éthylène-butène et éthylène-octène, produits de préférence par un catalyseur bien connu de type métallocène, suivant la technologie dite à « géométrie contrainte » et se présentant sous la forme de copolymères substantiellement linéaires. Ces copolymères sont également dénommés polyéthylènes linéaires de très basse densité.

Ces copolymères éthylène-alpha-oléfiniques sont obtenus par polymérisation de l'éthylène avec du butène ou de l'octène en présence d'un catalyseur appartenant à la famille de ceux dit à « géométrie contrainte », agissant sur site spécifique, et différant chimiquement en cela des catalyseurs de type métallocène classique.

D'une façon générale, les comonomères peuvent être présents à des taux différents, modifiant plus ou moins la cristallinité des matériaux résultants et dès lors leurs densités et par voie de conséquence, leurs propriétés viscoélastiques : en effet, un caractère suffisamment viscoélastique est nécessaire à l'obtention de performances de rupture ductile à très basse température.

En outre, le copolymère éthylène-alpha-oléfinique selon l'invention a un indice de fluidité choisi dans une plage évoluant de préférence entre 0,05 à 50g/10 minutes, sous une charge de 2,16 kilogrammes à 190°C, lorsque mesuré suivant la méthode ASTM D-1238, et plus préférentiellement de 0,2 à 20 g/10 minutes.

Le copolymère éthylène-alpha-oléfinique selon l'invention a une densité suffisamment faible correspondant à une très basse cristallinité. La densité est choisie à une valeur au plus égale à 0,870g/cm3 lorsque mesurée selon la méthode ASTM D-792. Il est à constater qu'il existe une corrélation entre la densité, la cristallinité et la valeur de la température de transition vitreuse. Les copolymères éthylène-alpha-oléfiniques présentant les plus basses températures de transition vitreuse sont ceux ayant la cristallinité la plus faible et dès lors la densité la plus faible et ce, quel que soit le comonomère d'alpha-oléfine sélectionné, qui sont en particulier le butène et l'octène. De tels élastomères oléfiniques ont des températures de transition vitreuses inférieures à -55 °C, pour des taux de cristallinité totale exprimés en pourcentage, d'au plus 15 % lorsque mesuré par analyse thermique différentielle.

Il faut également observer que :
- les copolymères d'éthylène-butène sélectionnés issus de tels procédés de copolymérisation, ont pour caractéristique de présenter une cristallinité plus faible que celle des copolymères d'éthylène-octène, à densité identique, renforçant cette capacité de viscoélasticité recherchée, propre à un comportement élastomérique.
- ces copolymères ont capacité à être partiellement réticulés, en présence d'agents réticulant et qu'ils parviennent alors à un état de type plastomérique, relevant à la fois des thermoplastiques et des élastomères.

Le copolymère alpha-oléfinique, selon l'invention, est ajouté en proportion de 25% à 50% en poids de la composition et préférentiellement de 30% à 45% en poids de copolymère d'éthylène-butène ou d'éthylène-octène.

Au-dessus de 50 % en poids de la composition, le module de rigidité est fortement abaissé. Au-dessous de 25 %, la résistance à l'impact à très basse température mesurée sur l'éprouvette entaillée est faible.

### Elastomères thermoplastiques

Selon l'invention, et de manière tout à fait surprenante, l'ajout d'un élastomère thermoplastique spécifique, dans des proportions particulières, au mélange réalisé à partir d'un copolymère de propylène, associé à un copolymère d'éthylène-alpha-oléfine et plus particulièrement d'éthylène-butène ou d'éthylène-octène sélectionnés, obtenus par polymérisation de l'éthylène avec du butène ou de l'octène en présence d'un catalyseur appartenant à la famille de ceux dit à « géométrie contrainte », agissant sur site spécifique, permet de réaliser une composition qui, lorsque partiellement réticulée et modifiée sur le plan rhéologique, en particulier pour ce qui concerne son composant polypropylénique, par un coagent générateur de radicaux libres, par extrusion et cisaillement à haute température, et une fois mise en oeuvre en une pièce de type insert, en particulier un capot, par des techniques d'injection, offre d'excellentes performances de choc entaillé et de rupture ductile à très basse température, tout en assurant des résistances thermiques satisfaisantes, et ce par rapport à d'autres compositions polyoléfiniques élastomériques thermoplastiques, toutes autres propriétés restant inchangées.

De plus, une telle composition présente des caractéristiques de mise en oeuvre telles qu'elles permettent d'obtenir des pièces présentant d'excellents aspects de surface.

Ces caractéristiques de haute résistance au choc entaillé et de rupture ductile à très basse température sont conférées par la présence de cet élastomère thermoplastique spécifique qui se manifeste comme un modificateur d'impact.

Selon l'invention, la composition oléfinique élastomérique thermoplastique partiellement réticulée contient au moins un élastomère thermoplastique spécifique choisi de manière à ce que les propriétés physiques de la composition soient renforcées pour ce qui est des résistances au choc entaillé à basse température, de la capacité à présenter une rupture ductile, sans pour autant perdre en matière de module de rigidité.

L'additif de modification d'impact est choisi dans le groupe constitué par les éthylène-propylène-diène (EPDM), les styrène-butadiène-styrène (SBS), les styrène-éthylène-butylène-styrène (SEBS), les caoutchoucs styrène-butadiène (SBR), les styrène-isoprène-styrène (SIS), les élastomères thermoplastiques sur base polyoléfine, en particulier sur polypropylène (homopolymères) avec des blocs amorphes et semi-cristallins et des copolymères de propylène/éthylène ou alpha-oléfine avec des blocs amorphes et semi-cristallins de type styrène-(éthylène/propylène) (SEP), styrène-b-(éthylène/propylène)styrène (SEPS), styrène-(éthylène/butylène)-styrène (SEBS), styrène-(éthylène-éthylène/propylène)-styrène (SEEPS).

De tels élastomères thermoplastiques spécifiques incluent les bloc-copolymères comportant un bloc A de polymère composé principalement d'au moins un composé aromatique de type vinyle et un bloc B de polymère composé principalement d'au moins un composé diène conjugué, ainsi que les bloc-copolymères obtenus par l'hydrogénation des bloc-copolymères et de polymères éthyléniques de faible poids moléculaire.

Les élastomères spécifiques sont préférentiellement choisis parmi le groupe des bloc-copolymères comportant un bloc A de polymère composé principalement d'au moins un composé aromatique de type vinyle et un bloc B de polymère composé principalement d'au moins un composé diène conjugué ou de bloc-copolymères obtenus par l'hydrogénation de l'ancien bloc-copolymère avec un élastomère oléfinique.

Le bloc-copolymère comportant au moins un composé aromatique de type vinyle contient au moins 50 % en poids du bloc aromatique de type vinyle et/ou de bloc d'homopolymère vinylique.

Le bloc-copolymère composé principalement au moins d'un composé de diène conjugué contient au moins 50% en poids du composé de diène conjugué et/ou de bloc homopolymère de composé de diène conjugué.

Le composé vinyle aromatique est choisi dans le groupe des styrènes, des méthyle-styrènes, des 1,3-diméthylstyrènes, des p-tert-butyle-styrènes. Le styrène est préférentiellement choisi.

Le composé de diène conjugué qui constitue le bloc-copolymère est choisi dans le groupe des butadiènes, des isoprènes, des 1,3-pentadiènes, des 2,3-diméthyl-1,3-butadiènes. Le butadiène et l'isoprène pris seuls ou en mélange sont préférentiellement choisis.

De tels élastomères thermoplastiques sont traditionnellement connus sous l'appellation SBS (styrène butadiène styrène) ou SIS (styrène isoprène styrène).

Les bloc-copolymères styréniques peuvent être hydrogénés au niveau des blocs intermédiaires et deviennent alors les bloc-copolymères plus connus sous les appellations SEBS, (styrène éthylène-butadiène-styrène), SEPS (styrène-éthylène-propylène-styrène) et SEP (styrène-éthylène-propylène).

Les bloc-copolymères hydrogénés sont obtenus entre autre par hydrogénation des bloc-copolymères précédemment évoqués, en particulier les SBS et les SIS.

Ces polymères peuvent être de type linéaire, A-B-A, comme l'est par exemple le styrène-butadiène-styrène ou de type radial, (A-B)ₙ (avec n > 2), ou de type bi-bloc A-B.

Selon l'invention, les SBS sont préférentiellement choisis.

Les bloc-copolymères dont les structures ont été mentionnées ci-dessus sont préférentiellement choisis parmi ceux ayant un poids moléculaire moyen d'au moins 20 000 g/mole, et préférentiellement compris entre 30 000 g/mole et 200 000 g/mole.

Un tel bloc-copolymère qui est l'élastomère thermoplastique lorsque présent dans la composition selon l'invention lui permet d'offrir d'excellentes caractéristiques mécaniques en particulier l'impact à très basse température mesurée sur éprouvette entaillée et la rupture ductile bien au-delà de ce que pourrait le faire tout élastomère thermoplastique, mais sans pour autant perdre en rigidité, et ce, grâce pour partie à sa capacité à la réticulation partielle à l'intérieur même de la composition.

Ainsi, le bloc-copolymère de la composition selon l'invention intervient-il comme composant intégral et solidaire de la composition. Grâce à la réaction de réticulation dynamique, obtenue lors du mélange dans l'extrudeuse à haute température et dans les conditions de cisaillement de l'extrudeuse, le bloc-copolymère développe sa capacité d'interaction dans le réseau constitué par le copolymère de propylène, associé au copolymère d'éthylène alpha-oléfine sélectionné, de par le fait qu'il devient élastomère thermoplastique partiellement vulcanisé dynamiquement et qu'il en va de même pour le copolymère d'éthylène alpha-oléfine devenant élastomère thermoplastique oléfinique également partiellement réticulé.

Le bloc-copolymère, additif de modification d'impact, selon l'invention, est ajouté en proportion de 1% à 15% en poids de la composition.

Au-dessus de 15% en poids de la composition, la possibilité de réticulation de la composition sera réduite, mais surtout le module de rigidité sera fortement abaissé. Au-dessous de 1%, le gain en résistance à l'impact à très basse température mesurée sur l'éprouvette entaillée n'est pas important.

### Polyéthylène haute densité

Selon l'invention, un polyéthylène de haute densité peut éventuellement être ajouté à la composition dans des proportions allant de 0% à 40% en poids de la composition totale et lorsque présent, préférentiellement compris entre 5% et 30% en poids de la composition totale. Un tel polyéthylène de haute densité généralement égale ou supérieure à 0,930 g/cm3 est choisi parmi ceux ayant un indice de fluidité compris entre 0,5 et 50 g/10 minutes. De tels polyéthylène haute densité sont produit par polymérisation de type Ziegler Natta.

### Agent de réticulation

Selon l'invention, la présence d'un agent de réticulation partielle permet de structurer le réseau constitué par les copolymères alpha-oléfiniques à base d'éthylène et l'élastomère thermoplastique spécifique et, dès lors, permet d'améliorer les propriétés de la composition en terme de son comportement élastomérique, l'hystérésis des courbes de traction/allongement et le comportement de la résistance à l'impact à basse température, y inclus la résistance au fluage, en particulier lorsque soumise à une élévation de température sous charge.

L'agent de réticulation qui peut être utilisé pour la production de la composition extrudée, destinée à être ensuite transformée en une pièce moulée telle que par exemple un capot pour le logement d'un coussin d'air de sécurité d'un véhicule automobile, est choisi dans le groupe constitué par les peroxydes organiques tels que le peroxyde de dicumyle, le 1,1-di-t-butyl-3,3,5-triméthylcyclohexane, le 2,5-diméthyl-2,5-di-t-butyl-peroxyhexane, le 2,5-dimethyle 2,5-di-t-butyl-peroxyhexane-3, le t-amyl peroxyethylhexonate, le di-t-butylperoxide, le di-(t-amyl) peroxide, le 2,5-di (t-amyl peroxy)-2,5-dimethylhexane, le 2,5-di-(t-butylperoxy)- 2,5-diphenylhexane, le bis (alpha-methylbenzyl) peroxide, le benzoyl peroxide, le t-butylperbenzoate, le 3,6,9-triethyl-3,6,9-trimethyl-1,4,7-triperoxonane et le bis (t-butylperoxy)diisopropylbenzene, le alfa-alfa-bis(t-butylperoxy)di-isopropylbenzène, la t-butyl-péroxycétone, le péroxybenzoate de t-butyle, et dans le groupe des silanes, l'un et l'autre type d'agent de réticulation pouvant être mis en oeuvre seul ou en mélange.

L'agent réticulant est présent dans la composition à raison de 0,1% à 3% en poids par rapport à la composition totale.

La réticulation au moins partielle de la composition, lorsque les peroxydes sont utilisés, s'effectue durant la phase d'extrusion-mélangeage de la composition, à température élevée et sous taux de cisaillement contrôlé.

### Agent générateur de radicaux libres et modificateur de rhéologie

La composition selon l'invention comprend également un agent ou coagent, modificateur de rhéologie, choisi dans le groupe des composés générateurs de radicaux libres de type monomère, dimères, trimères ou polymères de très bas poids moléculaire, possédant des groupes réactifs capables de créer par décomposition thermique des radicaux libres. De tels groupes fonctionnels sont par exemple des groupes allyle, des groupes vinyle, des groupes méthacrylate.

Les mécanismes de scission de chaîne et de branchement de chaînes dans les zones non cristallines engendrés par l'action du coagent générateur de radicaux libres permettent une modification rhéologique de la composition, altérant la distribution de poids moléculaire sans pour autant modifier substantiellement les autres aspects morphologiques. Il est vraisemblable que les comportements du copolymère à base de propylène, du copolymère d'éthylène et d'alpha-oléfine, et de l'élastomère thermoplastique spécifique à l'état fondu, en présence des radicaux libres générés, sont assez différents. L'état de l'art enseigne que des scissions de chaînes sont faciles pour les polypropylènes et que ces techniques sont utilisées pour contrôler la viscosité de tels polymères. Cependant, la présence des autres polymères rend complexe la prédiction du comportement rhéologique final pour la composition selon l'invention.

Ce coagent génère des radicaux libres car il est très réactif. Dès que ces radicaux libres sont formés, ils vont pouvoir se combiner avec les copolymères éthylène-alpha-oléfine et ainsi partiellement réticuler la phase de la composition comportant ces copolymères d'éthylène-alpha-oléfines. La dégradation du copolymère de propylène est réduite, par le fait qu'une partie des radicaux libres est utilisé pour réticuler les autres composants de la composition : ainsi le coagent de réticulation apparaît être un amplificateur de réticulation.

Selon l'invention, les coagents capables d'engendrer des radicaux libres pour l'application considérée sont choisi préférentiellement dans le groupe des diallyl téréphthalate, triallylcyanurate, triallylisocyanurate, 1,2 polybutadiène, divinyl benzène, triméthylolpropanetriméthacrylate, polyéthylène glycol dimethacrylate, éthylène glycol diméthacrylate, pentaerythritol triacrylate, allyl méthacrylate, N N'-m-phénylène bismaléimide, toluènebismaleimide-p-quinone dioxime, nitrobenzène,diphenylguanidine.

Les coagents modificateur de rhéologie très préférentiellement choisis sont les triallylcyanurate, 1,2 polybutadiene, divinyl benzène et triméthyolpropanetriméthacrylate (TMPTMA).

Le coagent modificateur de rhéologie est ajouté à la composition à raison de 0,05% à 2% et préférentiellement de 0,10% à 1,5% en poids de la composition totale.

Selon l'invention, la composition comprend, un système de stabilisation. Ce système de stabilisation est d'abord photonique c'est-à-dire anti-UV. L'agent de stabilisation photonique est choisi parmi les produits de type HALS c'est-à-dire une amine à fort encombrement stérique, les benzophénones, les benzotriazoles, mis en oeuvre seuls ou en mélange.

Les amines à fort encombrement stérique sont préférentiellement retenues. Parmi ces amines, les amines peuvent être citées les amines dites polymériques qui ont un poids moléculaire de 2000 g/mole, et les amines dite monomériques qui ont un poids moléculaire de l'ordre de 500 g/mole.

Cet agent de stabilisation photonique est incorporé à raison de 0,1% à 0,5% (1000 à 5000 ppm) en poids de la composition totale.

Ce système de stabilisation est également chimique c'est-à-dire antioxydant : les agents antioxydants sont des composés de type phénolique, (antioxydant primaire) ou de type phosphites (antioxydant secondaire), mis en oeuvre seuls ou en mélange.

L'antioxydant est formulé de manière spécifique sur le plan quantitatif. Les proportions retenues sont de 0,1% à 0,5% en poids de la composition totale pour l'antioxydant.

Selon l'invention, la composition peut aussi comprendre de 0,5% à 15% en poids d'une charge minérale pulvérulente non siliceuse, notamment de type carbonate de calcium, talc, kaolin, noir de carbone ou dioxyde de titane. L'ajout de charges va toutefois dans un sens défavorable par rapport au souci de maintien de propriété de choc à basse température mais réduit le coût de la composition. Des ajouts de charges nanométriques de type argile lamellaire sont également possibles.

Enfin, des colorants sous forme de pigment minéraux ou colorants organiques peuvent également être considérés pour être incorporés dans la composition.

Les composants de la composition selon l'invention sont combinés en un mélange homogène par toute technique telle que, par exemple, l'extrusion malaxage (compoundage). Les composants de la composition sont alors incorporés, sous la forme de granulés ou sous forme de poudre, suivant les types de composants, dans un mélangeur avant plastification et homogénéisation. Le mélange peut être réalisé selon un procédé discontinu opérant par lots ou selon un procédé continu.

Les composants peuvent être mélangés, par exemple, dans un mélangeur interne tel qu'un mélangeur de type Banbury, dans une extrudeuse à simple ou double vis, co-rotative ou contra-rotative ou dans n'importe quel autre mélangeur capable de fournir l'énergie suffisante pour fondre et homogénéiser complètement le mélange.

La fabrication du mélange issu de la composition peut se faire toutefois de manière préférentielle par extrusion malaxage (compoundage) dans une extrudeuse double vis. Dans tous les cas, une attention particulière est à apporter au contrôle des températures et aux conditions de cisaillement (profil de vis et vitesse de rotation) afin de s'assurer de la performance des agents réticulants et des coagents modificateurs de rhéologie. Un tel mélange doit être un mélange uniforme et homogène.

Les composants peuvent être incorporés au mélange de manière séquentielle à n'importe quelle étape pendant l'opération de mélange ou pendant l'étape d'extrusion.

Des quantités prédéterminées d'agent réticulant et de coagent initiateur de radicaux libres peuvent être injectées dans l'extrudeuse par l'orifice d'injection en aval de la zone d'alimentation de l'extrudeuse par une pompe appropriée.

Une fois les composants mélangés, la composition est extrudée en granulés obtenus par coupe sous refroidissement d'eau, granulés qui seront stockés, pour être ensuite transformés en objets et en pièces, en particulier en capot destiné à être inséré dans la colonne de direction ou sur une planche de bord ou sur un panneau de portières ou toute autre zone du véhicule automobile pouvant accueillir un tel dispositif de sécurité active opérant par coussin gonflé par un mécanisme pyrotechnique. Les techniques de transformation utilisées sont celles de la plasturgie telles que, l'injection en particulier s'il s'agit d'un capot, capot devant présenter des épaisseurs de parois très différentes, entre zone d'amorce de déchirure et zone structurelle de support et de montage.

L'application de la composition en est la réalisation de capots pour logement de coussin d'air de sécurité d'un véhicule automobile, comprenant des zones de rupture prédéterminées, devant se déchirer sous l'effet du gonflement instantané du coussin d'air, sans pour autant entraîner des fragmentations des zones proches de la zone de déchirure préconçue à cet effet.

Les propriétés rhéologiques de la composition selon l'invention, sont telles qu'elles permettent la mise en oeuvre de la composition dans des machines d'injection pour la réalisation de pièces comprenant des zone de très faibles épaisseurs, de l'ordre de quelques dixièmes de millimètres et dès lors lieu de contraintes de cisaillement élevées, sans pour autant conduire à des besoins excessifs en pression d'injection ni provoquer des zones de turbulences générant des orientations de la matière susceptible d'engendrer des défauts de surface.

Les propriétés rhéologiques sont exprimées par respectivement :
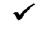 le test de mesure de l'indice de fluidité mesuré sous 2,16 kg à 230°C suivant la norme ISO 1133, mais surtout par,
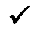 le test de mesure de la longueur de remplissage, exprimée en centimètres, d'une spirale d'un moule d'injection de section déterminée, cette spirale étant remplie dans des conditions de pression d'injection de matière, de température de matière, et de température de moule contrôlées, ces conditions étant explicitées suivant un test interne.

Une telle composition selon l'invention présente également des caractéristiques de mise en oeuvre telles qu'elles permettent d'obtenir des pièces présentant d'excellents aspects de surface. Une telle composition peut être moulée à des cadences élevées résultant de temps d'injection réduits et surtout de temps d'éjection réduits.

Les pièces réalisées à partir de la composition selon l'invention ne présentent pas d'adhérence sur les parois du moule venant contrarier l'éjection de la pièce.

### EXEMPLES

Des exemples de composition sont décrits dans les tableaux ci-après, les quantités des composants étant exprimées en pourcentages en poids par rapport à la composition complète totale.

Les copolymères à base de propylène ont été respectivement :
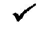 le PPC 3660 de ATOFINA, de densité 0,905 g/cm3 mesuré suivant la norme ISO 1183 (ASTM-1505) et d'indice de fluidité 1,3 g/10 minutes, mesuré suivant la norme ISO 1133 (ASTM 1238) à 230°C et sous 2,16 kg de charge. Il s'agit d'un copolymère hétérophasique ayant un point de fusion de 165 °C suivant la norme ISO 3146 et de choc à froid Izod entaillé, suivant la norme ISO 180 de >50 kJ/m².
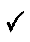 le PPC 7810 de ATOFINA, de densité 0,905 g/cm3 mesuré suivant la norme ISO 1183 (ASTM-1505) et d'indice de fluidité 15 g/10 minutes, mesuré suivant la norme ISO 1133 (ASTM 1238) à 230°C et sous 2,16 kg de charge. Il s'agit d'un copolymère hétérophasique à résistance à l'impact déjà élevé, ayant un point de fusion de 165 °C suivant la norme ISO 3146 et de choc à froid Izod entaillé, suivant la norme ISO 180 de >50 kJ/m².
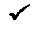 le PPC 9712 de ATOFINA, de densité 0,905 g/cm3, et d'indice de fluidité 25 g/10 minutes, mesuré suivant la norme ISO 1133 à 230°C et sous 2, 16 kg de charge. Il s'agit d'un copolymère hétérophasique à résistance à l'impact légèrement moins élevé que le copolymère précédent, de par sa plus grande fluidité, ayant un point de fusion de 165 °C suivant la norme ISO 3146 et de choc à froid Izod entaillé, suivant la norme ISO 180 de >40 kJ/m².
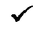 PP 8013 Ll de EXXONMOBIL, de densité 0,905 g/cm3 et d'indice de fluidité 8 g/10 minutes, de point de fusion 163 °C et de choc à froid Izod entaillé, de 50 kJ/m².

Un polypropylène homopolymère a également été testé, à titre comparatif ; il s'agit du PPH 100GA 12 de ATOFINA, de densité 0,905 g/cm3 et d'indice de fluidité 12 g/10 minutes, de point de fusion 165 °C et de choc à froid Izod entaillé, de 4 kJ/m².

Les copolymères d'éthylène-butène sélectionnés obtenus par copolymérisation d'éthylène avec un co-monomère de butène, ou avec un co-monomère d'octène et ce, en présence d'un catalyseur dit à « géométrie contrainte » sont disponibles commercialement dans des groupes tels que EXXON CHEMICAL COMPANY sous la marque Exact®, DOW CHEMICAL COMPANY et DOW DUPONT ELASTOMERS sous les marques Affinity® et Engage®, ainsi que sous la marque Tafmer® de MITSUI CHEMICALS.

Les copolymères éthylène-butène, de désignation commerciale Engage® :
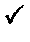 ENR 7467 de densité 0,863 g/cm³ et d'indice de fluidité 1,0 g/10 minutes,
ainsi que les copolymères éthylène-octène, de désignation commerciale Engage® :
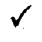 8842 de densité 0,857 g/cm³ selon ASTM D-792 et d'indice de fluidité de 1,0 g/10 min selon ISO 1133(ASTM D-1238) ont été utilisés dans différentes compositions.
   Les copolymères d'éthylène-octène, de désignation commerciale Tafmer® DF610 de densité 0,862 g/cm³ selon ASTM D-792 et d'indice de fluidité de 1,2 g/10 min selon ISO 1133 (ASTM D-1238) ont également été testés.

Enfin des copolymères d'éthylène-butène, de désignation commerciale Engage® de différentes densités plus élevées et de différents indices de fluidité ont également été testés de manière comparative :
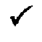 Engage® 8100 de densité 0,870 g/cm³ et d'indice de fluidité de 1,0 g/10 minutes,
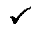 Engage® 8130 de densité 0,864 g/cm³ et d'indice de fluidité 13 g/10 minutes,
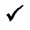 Engage® 8400 de densité 0,870 g/cm³ et d'indice de fluidité 30 g/10 minutes,

L'élastomère thermoplastique de type SBS choisi était le Calprene® 501 de la société DYNASOL ELASTOMERS. Cet élastomère est un copolymère thermoplastique de type Styrène/Butadiène/Styrène dont les teneurs en butadiène sont de 69 % et en styrène de 31 %, (lorsque mesuré suivant la méthode ASTM D-5775), polymérisé en solution et ayant une structure linéaire. Sa dureté shore A est de 76, mesurée suivant la norme ASTM D-2240. Le Calprene® 501 a un poids moléculaire élevé, lorsque mesuré par l'intermédiaire de sa viscosité.

L'élastomère thermoplastique de type SBS choisi à titre comparatif était le Calprene® 500 de la société DYNASOL ELASTOMERS. Il a également une structure linéaire, mais son poids moléculaire est plus faible, toujours lorsque mesuré par l'intermédiaire de sa viscosité.
Les poids moléculaires des Calprene® 500 et 501 sont respectivement Mw= 110000 g/mole pour le Calprene® 500 et Mw= 150000 g/mole pour le Calprene® 501.

A titre d'essais comparatifs, d'autres élastomères thermoplastiques ont été testés :
Il s'agissait des SEEPS, qui sont des polystyrene-b-poly(ethylène-ethylène/propylène)-b-polystyrène, (b) désignant des blocs. Ces matériaux sont des poly(styrène-b-isoprène/butadiène-b-styrène) hydrogénés. Deux différents types de SEEPS ont été testés, le Septon® 4033, de bas poids moléculaire et le Septon® 4055, de haut poids moléculaire, ces deux élastomères thermoplastiques étant disponibles chez KURARAY CO LTD.

Un autre élastomère thermoplastique a également été testé ; il s'agissait de SEBS (styrène/éthylène/butadiène/styrène) vendu sous la référence Tuftec® H1062 de ASAHI KASEI CHEMICAL CORP. Le taux de styrène était de 17,5 % en poids.

L'agent réticulant utilisé est un peroxyde organique, de type 2,5-Dimethyl-2,5-di(t-butylperoxy)hexane, de référence 101-XL-45 commercialisé sous la marque Lupérox® par ATOFINA ARKEMA. Un autre agent a été également testé, de référence 101-PP-7,5 commercialisé sous la marque Lupérox® par ATOFINA ARKEMA. Ce produit contient majoritairement du 2,5-dimethyl -2,5-di(t-butylperoxy) hexane, mais également du 3,3,6,6-tetraméthyl-1,2-dioxacyclohexane et du di-tert-butyl péroxide.

D'autres agents réticulants auraient été tout autant possibles, tels que le Luperox® F, d'ATOFINA ARKEMA, toujours de type bis (tertio-butylperoxyisopropyl)benzene, ou de type tertio-butylcumylperoxyde, par exemple de référence Luperox® 801 ou Trigonox® T d'AKZO NOBEL CHEMICALS, ou de type di-tertio-butylperoxyde, par exemple de référence Trigonox® B.

Le coagent de modification de rhéologie retenu, fournisseur de radicaux libres, est un triméthylolpropane triméthacrylate (TMPTMA) sous forme de mélange maître sur un support de carbonate de calcium à 70 % en poids disponible commercialement sous la marque ALCAN POUDRE TMPTMA 70 ® EP de SAFTIC ALCAN. Le triméthylolpropane triméthacrylate est lui-même disponible chez ATOFINA SR-350 (TMPTMA).

D'autres coagents auraient tout autant pu être incorporés tels que les triméthylolpropane trimethacrylate (SR-350 KD96 de SARTOMER COMPANY, INC. formulé ou non avec un silicate de calcium, ou tels que les triallyl cyanurate de CYTEC INDUSTRIES,INC. ou les 1,2-polybutadiene vendus sous la marque Ricon® 152D de SARTOMER CORPORATION également formulé ou non avec un silicate calcium.

Un agent de stabilisation thermique a été introduit dans la composition. Il s'agissait, du tris(2,4-ditert-butylphenyl) phosphite vendu sous la marque Irgafos® 168 de la société CIBA SPECIALTY CHEMICALS.

Du noir de carbone sous la forme d'un mélange maître vendu sous la référence POLYBLAK® 1423, de la société A. SCHULMAN, a été ajouté à la composition.

La mise en oeuvre s'est faite sur une extrudeuse bi-vis Maris de laboratoire, de diamètre de 40 mm, équipée de onze zones de chauffe dont les consignes en température ont été fixées entre 180°C et 220 °C.

Les copolymères à base de propylène, les copolymères éthylène alpha-oléfines, les élastomères thermoplastiques, les agents de réticulation et les coagents modificateurs de rhéologie, ainsi que les différents autres additifs ont été introduits en entrée principale de l'extrudeuse après avoir été mélangés au mélangeur lent. Un équipement de coupe en tête, refroidi sous eau a permis de fabriquer des granulés.

Les propriétés de caractérisation essentielle de la composition selon l'invention ont été respectivement la dureté exprimée en shore D, suivant la norme ISO 868, l'indice de fludité, exprimé en g/10 minutes sous respectivement 2,16 kg à 230 °C suivant la norme ISO 1133 (équivalent ASTM 1238).

La caractérisation rhéologique combinant les performances de viscosité sous taux de cisaillement élevés tels que ceux existant dans un procédé d'injection, s'est faite par l'intermédiaire du test de la longueur de la spirale exprimée en centimètres de remplissage d'un tel moule, plutôt que par la mesure d'un indice de fluidité sous charge plus élevée.

Des éprouvettes échantillons ont été réalisées à partir de la composition selon l'invention ainsi extrudée puis granulée, suivant les normes acceptées de fabrication d'éprouvettes par moulage par injection.

Les conditions de test et de mesure ont été celles décrites dans les normes ISO et ASTM pour tout ce qui concerne les essais mécaniques, aussi bien propriétés de traction, contrainte à la rupture et allongement à la rupture, à température ambiante et à - 35°C, (ISO R527, ASTM D 638, 20 mm/min de vitesse de traction), pour le module de flexion (ISO 178, ASTM D 790 2 mm/min), de déchirure, (ISO 34, ASTM...), que propriétés de résistance aux chocs à froid, -40°C, -45 °C, -50 °C sur éprouvette entaillée, Izod, (ASTM D 256).

Pour les essais à basse température, la température réelle de l'échantillon a été retenue et les tests en particulier d'impact (choc Izod amorcé, sur éprouvette entaillées) ont effectivement été réalisés à ces températures de respectivement -40 °C, -45 °C et -50 °C.

Une corrélation mesurée amenant à conclure qu'une non-rupture d'une éprouvette au choc entaillé à -45 °C permettait de passer les tests réels d'éclatement du coussin d'air de sécurité à -35 °C de température réelle, et qu'une non-rupture au choc entaillé à - 50 °C permettait de passer avec une sécurité totale tous les tests d'éclatement du coussin d'air de sécurité quelles que soit les conditions température retenues actuellement.

Une autre corrélation a été mesurée à bien amenant à conclure qu'une composition dont l'indice de fluidité sous 2,16 kg à 230 °C, compris entre 2 et 12 g/10 minutes combiné à un remplissage de spirale compris entre 20 et 50 centimètres permettait de satisfaire aux exigences en matière de facilité de remplissage de moule et d'aspect de surface pour de telles pièces injectées.

Les données expérimentales réunies dans le tableau 1 mettent en évidence la différence de performance sur le plan de la tenue au choc entaillé à froid entre une composition témoin (référencée 2a) ne comportant pas d'élastomère thermoplastique et la composition selon l'invention (référencée la). Si la résistance au choc entaillé à froid à -40 °C est équivalente dans les deux cas, il y a une forte différence en faveur de la composition selon l'invention, c'est à dire avec présence de l'élastomère thermoplastique. Les éprouvettes fabriquées à partir d'une composition ne contenant pas d'élastomère thermoplastique vont se rompre brutalement lorsque testées en résistance au choc entaillé à froid mesurées à -45 °C ; alors que les éprouvettes fabriquées à partir de la composition contenant un élastomère thermoplastique ne casse pas.

Les quantités de copolymère éthylènes alpha-oléfines sont les mêmes dans les deux cas, 37 % et 38 % respectivement, les additifs de réticulation et les coagents sont identiques, mais les quantités de copolymère à base de propylène ont été réduites et remplacées par l'élastomère thermoplastique spécifique dans le cadre de la composition selon l'invention. L'indice de fluidité de la composition selon l'invention est légèrement plus faible, ce qui entraîne également une longueur de spirale moindre par plus haute viscosité de la composition.

**Tableau 1 - Effet de la présence de SBS**

| **Numéro de la composition** | **1a** | **2a** |
|---|---|---|
| Référence de la composition | PL20627 | PL19292 |
| Variables | Avec SBS | Sans SBS |
| PPC 3660 | 60,26 | 61,26 |
| ENGAGE 8842 | 34,00 | 37,00 |
| CALPRENE 501 | 4,00 | 0 |
| LUPEROX 101-XL-45 | 0,33 | 0,33 |
| ALCAN POUDRE TMPTMA 70 | 0,21 | 0,21 |
| IRGAFOS 168 | 0,20 | 0,2 |
| NOIR 1423 | 1,00 | 1,00 |
| Total | 100,00 | 100,00 |
| | | |

| **Propriétés Critiques** | | |
|---|---|---|
| Dureté shore D | 42 | 40 |
| Indice de fluidité | 8,00 | 8,55 |
| Longueur Spirale | 36,30 | 37,20 |
| Contrainte Rupture | 13,10 | 12,70 |
| Allongement rupture | 347,00 | 375,00 |
| Déchirure | 84,50 | 85,60 |
| Module de Flexion | 292,00 | 319,00 |
| Module de Flexion -35 °C | 985,00 | 1027,00 |
| Choc Izod Entaillé-40 °C | NB (71,35) | NB (71,7) |
| Choc Izod Entaillé -45 °C | NB (63,22) | 9C (10) Rupture Cassante |
| Choc Izod Entaillé -50 °C | 9C (10,5) Rupture Cassante | - |

| | | |
|---|---|---|
| NB, non-rupturee | | |

Le tableau 2 met en évidence l'effet du pourcentage de SBS dans la composition à la fois sur la résistance à l'impact en matière d'énergie absorbée lors du choc sur éprouvette entaillé à -45 °C et sur la fluidité.

**Tableau 2 - Effet du % de SBS**

| **Numéro de la composition** | **1a** | **3a** |
|---|---|---|
| Référence de la composition | PL20627 | PL20488 |
| Variable % de SBS | 4 % SBS | 6 % SBS |
| PPC 3660 | 60,26 | 54,36 |
| ENGAGE 8842 | 34,00 | 38,00 |
| CALPRENE 501 | 4,00 | 6,00 |
| LUPEROX 101-XL-45 | 0,33 | 0,33 |
| ALCAN POUDRE TMPTMA 70 | 0,21 | 0,21 |
| IRGAFOS 168 | 0,20 | 0,10 |
| NOIR 1423 | 1,00 | 1,00 |
| Total | 100,00 | 100,00 |
| | | |

| **Propriétés Critiques** | | |
|---|---|---|
| Dureté shore D | 42 | 39 |
| Indice de fluidité | 8,00 | 4,50 |
| Longueur Spirale | 36,30 | 32,60 |
| Contrainte Rupture | 13,10 | 12,40 |
| Allongement rupture | 347,00 | 257,00 |
| Déchirure | 84,50 | 80,70 |
| Module de Flexion | 292,00 | 237,00 |
| Module de Flexion -35 °C | 985,00 | 786,00 |
| Choc Izod Entaillé -40 °C | NB (71,35) | NB (72) |
| Choc Izod Entaillé -45 °C | NB (63,22) | NB (68,6) |
| Choc Izod Entaillé -50 °C | 9C (10,5) Rupture Cassante | 9C (9) Rupture Cassante |

| | | |
|---|---|---|
| NB, non-rupturee | | |

Les données expérimentales réunies dans le tableau 3 mettent en évidence l'influence du poids moléculaire de l'élastomère thermoplastique entrant dans la composition selon l'invention.

**Tableau 3 - Effet du poids moléculaire de l'élastomère thermoplastique**

| **Numéro de la composition** | **3a** | **4** |
|---|---|---|
| Référence de la composition | PL20488 | PL20487 |
| Variable | SBS haut Mw | SBS bas Mw |
| PPC 3660 | 54,36% | 54,36% |
| ENGAGE 8842 (E/B MFI 1, Basse densité) | 38,00% | 38,00% |
| CALPRENE 501 (Haut Mw SBS) | 6,00% | |
| CALPRENE 500 (Bas Mw SBS) | | 6,00% |
| LUPEROX 101-XL-45 | 0,33% | 0,33% |
| ALCAN POUDRE TMPTMA 70 | 0,21 % | 0,21 % |
| IRGAFOS 168 | 0,10% | 0,10% |
| NOIR 1423 | 1,00% | 1,00% |
| Total | 100,00% | 100,00% |
| | | |

| **Propriétés critiques** | | |
|---|---|---|
| Dureté Shore D | 39 | 40 |
| Indice de fluidité | - | - |
| Longueur Spirale | 32,6 | 33 |
| Contrainte Rupture | 12,4 | 12,8 |
| Allongement rupture | 257 | 261 |
| Déchirure | 80,7 | 81,9 |
| Module de Flexion | 237 | 248 |
| Module de Flexion -35 °C | 786 | - |
| Choc Izod -40 °C | - | NB (54,2) |
| Choc Izod -45 °C | NB (68,6) | Rupture |
| Choc Izod -50 °C | Rupture | Rupture |

L'utilisation d'un élastomère thermoplastique de haut poids moléculaire dans la composition selon l'invention permet de sécuriser une résistance au choc sur éprouvette entaillée à basse température. L'élastomère thermoplastique retenu dans ce test est le SBS.

Les données expérimentales réunies dans le tableau 4 mettent en évidence l'effet de différents types d'élastomères thermoplastiques qu'il est possible d'utiliser, par exemple SBS, SEBS, SEEPS, et ce, dans des poids moléculaires différents dans la composition selon l'invention. Tous les pourcentages sont identiques pour les composants de la composition. L'élastomère thermoplastique est ajouté à raison de 4 % en poids dans les trois exemples. La performance de la composition utilisant le SBS de haut poids moléculaire est nettement supérieure à la performance des deux autres compositions utilisant les autres élastomères thermoplastiques de bas poids moléculaire. A noter que les propriétés de traction et de déchirure ne dénotent pas ce type de différence en faveur de la composition mettant en oeuvre le SBS de plus haut poids moléculaire. Par ailleurs, les valeurs d'écoulement dans des conditions d'injection sont tout à fait comparables.

**Tableau 4 - Effet du type d'élastomère thermoplastique**

| **Numéro de la composition** | **5** | **6** | **1a** |
|---|---|---|---|
| Variable | SEEPS | SEBS | SBS |
| Référence de la composition | PL20625 | PL20624 | PL20627 |
| PPC 3660 | 60,26% | 60,26% | 60,26% |
| ENGAGE 8842 (E/B MFI 1, Basse densité) | 34,00% | 34,00% | 34,00% |
| CALPRENE 501 (Haut Mw SBS) | | | 4,00% |
| SEPTON 4033 (Bas Mw SEEPS) | 4,00% | | |
| TUFTEC H1062 (Bas Mw SEBS) | | 4,00% | |
| LUPEROX 101-XL-45 | 0,33% | 0,33% | 0,33% |
| ALCAN POUDRE TMPTMA 70 | 0,21% | 0,21 % | 0,21% |
| IRGAFOS 168 | 0,20% | 0,20% | 0,20% |
| NOIR 1423 | 1,00% | 1,00% | 1,00% |
| Total | 100,00% | 100,00% | 100,00% |
| | | | |

| **Propriétés critiques** | | | |
|---|---|---|---|
| Dureté Shore D | 40 | 42 | 42 |
| Indice de fluidité | - | - | - |
| Longueur Spirale | 36 | 36,1 | 35,3 |
| Contrainte Rupture | 12,8 | 13 | 13,1 |
| Allongement rupture | 332 | 428 | 347 |
| Déchirure | 85,6 | 85 | 84,1 |
| Module de Flexion | 303 | 312 | 292 |
| Module de Flexion -35 °C | - | - | - |
| Choc Izod -40 °C | NB (72,62) | NB (73,39) | NB (71,35) |
| Choc Izod -45 °C | Rupture | Rupture | NB (63,22) |
| Choc Izod -50 °C | - | - | Rupture |

Les données expérimentales réunies dans le tableau 5 mettent en évidence les propriétés de résistance mécanique d'éprouvettes réalisées à partir de compositions mettant en oeuvre copolymères d'éthylène alfa oléfine de différents types, copolymères d'éthylène-butène et copolymères d'éthylène octène obtenus par copolymérisation d'éthylène avec un co-monomère de butène ou d'octène, en présence d'un catalyseur dit à « géométrie contrainte », suivant leur densité et leur indice de fluidité.

**Tableau 5 - Effet de l'octène ou du butène comme co-monomère de l'alpha oléfine**

| **Numéro de la composition** | **7** | **8** |
|---|---|---|
| Référence de la composition | PL20382 | PL20397 |
| Variable | Butène | Octène |
| PPC 3660 | 54,36% | 54,36% |
| ENGAGE 8842 (E/B MFI 1, Basse densité) | 38,00% | |
| TAFMER DF610 (E/O MFI 1, Basse densité,) | | 38,00% |
| SEPTON 4033 (Bas Mw SEEPS) | 6,00% | 6,00% |
| LUPEROX 101-XL45 | 0,33% | 0,33% |
| ALCAN POUDRE TMPTMA 70 | 0,21% | 0,21% |
| IRGAFOS 168 | 0,10% | 0,10% |
| NOIR 1423 | 1,00% | 1,00% |
| Total | 100,00% | 100,00% |
| | | |

| **Propriétés critiques** | | |
|---|---|---|
| Dureté Shore D | 38 | 37 |
| Indice de fluidité | - | - |
| Longueur Spirale | 35 | 33,7 |
| Contrainte Rupture | 12 | 11 |
| Allongement rupture | 255 | 141 |
| Déchirure | 82,6 | 72 |
| Module de Flexion | 290 | 244 |
| Module de Flexion -35 °C | - | 830 |
| Choc Izod -40 °C | NB (68,4) | - |
| Choc Izod -45 °C | Rupture | NB (73,2) |
| Choc Izod -50 °C | - | Rupture |

Dans les deux cas, l'indice de fluidité de l'alpha-oléfine est de 1 g/10 minutes, et les densités basses, à 0,857 g/cm3 pour l'éthylène-butène et de 0,863 g/cm3 pour l'éthylène-octène. Il est à remarquer que la cristallinité de l'éthylène-butène est inférieure à la cristallinité de l'éthylène-octène à densité identique.

Le tableau 6 met en évidence l'effet des différentes densités et différents indices de fluidité pour l'utilisation d'alpha oléfine de type butène.
On observe qu'un indice de fluidité plus élevé conduit à une réduction des performances ainsi que l'utilisation d'alpha oléfines de densités plus élevées.

**Tableau 6- Effet des différentes densités et indice de fluidité pour l'utilisation d'alpha oléfine de type butène**

| **Numéro de la composition** | **3a** | **17** | **18** | **19** |
|---|---|---|---|---|
| Référence de la composition | PL20488 | PL | PL | PL |
| Variable : indice de fluidité et densité des éthylène- butène | MFI 1, densité 0,857 | MFI 1, densité 0,870 | MFI 13, densité 0,864 | MFI 30, densité 0,870 |
| PPC 3660 | 54,36% | 54,36% | 54,36% | 54,36% |
| ENGAGE 8842 (E/B MFI 1, densité 0,857)) | 38,00% | | | |
| ENGAGE 8100 (EB, MFI: 1, densité:0,870) | | 38,00% | | |
| ENGAGE 8130 (E/B, MFI:13, densité:0,864) | | | 38,00% | |
| ENGAGE 8400 (E/B, MFI: 30, densité:0,870) | | | | 38,00% |
| CALPRENE 501 | 6,00% | 6,00% | 6,00% | 6,00% |
| LUPEROX 101-XL-45 | 0,33% | 0,33% | 0,33% | 0,33% |
| ALCAN POUDRE TMPTMA 70 | 0,21% | 0,21% | 0,21% | 0,21% |
| IRGAFOS 168 | 0,10% | 0,10% | 0,10% | 0,10% |
| NOIR 1423 | 1,00% | 1,00% | 1,00% | 1,00% |
| Total | 100,00% | 100,00% | 100,00% | 100,00% |
| | | | | |

| **Propriétés critiques** | | | | |
|---|---|---|---|---|
| Dureté Shore D | 39 | | | |
| Indice de fluidité | - | | | - |
| Longueur Spirale | 32,6 | | | |
| Contrainte Rupture | 12,4 | | | |
| Allongement rupture | 257 | | | |
| Déchirure | 80,7 | | | |
| Module de Flexion | 237 | | | |
| Module de Flexion -35 °C | 786 | | | |
| Choc Izod -40 °C | NB (72) | Rupture | - | Rupture |
| Choc Izod -45 °C | NB (68,6) | Rupture | Rupture | Rupture |

Ces données montrent qu'à densité égale mais à indice de fluidité plus élevée, il y a perte de résistance à l'impact et que le choix de très basse densité permet l'obtention de valeur de résistance au choc élevé.

Les données expérimentales réunies dans le tableau 7 montrent des résultats comparés entre des compositions selon l'invention, utilisant différents types de copolymères de propylène.

**Tableau 7 - Effet du type de copolymère à base de propylène**

| **Numéro de la composition** | **3a** | **9** | **10** | **11** | **20** |
|---|---|---|---|---|---|
| Référence de la composition | PL20488 | PL20853 | PL20883 | PL20884 | PL |
| Variable type de PP | PPC -MFI 1,3, Pt Fusion 165°C Choc Izod à 23 °C : >50 kJ/m² | PPC -MFI 8, Pt Fusion 163°C Choc Izod à 23 °C : 50 kJ/m² | PPC -MFI 15, Pt Fusion 165°C Choc Izod à 23 °C : >50 kJ/m² | PPC -MFI 25, Pt Fusion 165°C Choc Izod à 23 °C : >40 kJ/m² | PPH, -MFI 12 Pt Fusion 165°C Choc Izod à 23 °C : 4 kJ/m² |
| PP8013 | | 54,36 | | | |
| PPH 100GA12 | | | | | 54,36 |
| PPC 3660 | 54,36 | | | | |
| PPC 7810 | | | 54,36 | | |
| PPC 9712 | | | | 54,36 | |
| ENGAGE 8842 | 38,00 | 38,00 | 38,00 | 38,00 | 38,00 |
| CALPRENE 501 | 6,00 | 6,00 | 6,00 | 6,00 | 6,00 |
| ALCAN POUDRE TMPTMA 70 | 0,21 | 0,21 | 0,21 | 0,21 | 0,21 |
| IRGAFOS 168 | 0,10 | 0,10 | 0,10 | 0,10 | 0,10 |
| NOIR 1423 | 1,00 | 1,00 | 1,00 | 1,00 | 1,00 |
| Total | 100,00 | 100,00 | 100,00 | 100,00 | 100,00 |
| | | | | | |

| **Propriétés Critiques** | | | | | |
|---|---|---|---|---|---|
| Dureté shore D | 39,00 | 34,00 | 32,00 | 35,00 | |
| Indice de fluidité | - | 5,63 | 5,89 | 7,33 | |
| Longueur Spirale | 32,60 | 34,51 | 32,98 | 34,99 | |
| Contrainte Rupture | 12,40 | 9,00 | 9,60 | 10,60 | |
| Allongement rupture | 257,00 | 339,00 | 338,00 | 408,30 | |
| Déchirure | 80,70 | 59,80 | 63,30 | 68,20 | |
| Module de Flexion | 237,00 | 175,00 | 165,00 | 212,00 | |
| Module de Flexion -35 °C | 786,00 | - | - | - | |
| Choc Izod Entaillé -40 °C | - | - | - | - | Rupture |
| Choc Izod Entaillé -45 °C | NB (68,6) | NB (74,6) | NB (73,6) | NB (69,5) | Rupture |
| Choc Izod Entaillé -50 °C | 9C (9) Rupture Cassante | P(72) 4Ch(20) Rupture partielle ductile | 9C (13,7) Rupture Cassante | 9C (18,4) Rupture Cassante | Rupture |

Les résultats avec un homopolymère à base de propylène montrent clairement la fragilité à l'impact à basse température de telles compositions. Les résultats avec des copolymères à base de propylène dont les valeurs de résistance au choc Izod à température ambiante sont > 40 kJ/m² montre également les différences en matière d'énergie absorbée.

Les effets des systèmes de réticulation sont illustrés dans les tableaux 8, 9 et 10.

**Tableau 8 - Effet du type d'agent réticulant**

| **Numéro de la composition** | **12** | **13** |
|---|---|---|
| Référence de la composition | PL20854 | PL20860 |
| PP8013 | 54,54 | 52,69 |
| ENGAGE 8842 | 38,00 | 38,00 |
| CALPRENE 501 | 6,00 | 6,00 |
| LUPEROX 101-XL-45 | 0,15 | - |
| LUPEROX 101 PP 7 5 | - | 2,00 |
| ALCAN POUDRE TMTMA 70 | 0,21 | 0,21 |
| IRGAFOS 168 | 0,10 | 0,10 |
| NOIR 1423 | 1,00 | 1,00 |
| Total | 100,00 | 100,00 |
| | | |

| **Propriétés Critiques** | | |
|---|---|---|
| Dureté shore D | 33,00 | 32,00 |
| Indice de fluidité | 3,65 | 3,98 |
| Longueur Spirale | 31,75 | 30,46 |
| Contrainte Rupture | 10,20 | 10,30 |
| Allongement rupture | 238,00 | 202,00 |
| Déchirure | 88,90 | 69,40 |
| Module de Flexion | 138,00 | 187,00 |
| Module de Flexion -35 °C | - | - |
| Choc Izod Entaillé -40 °C | - | - |
| Choc Izod Entaillé-45 °C | NB (71,1) | NB (74) |
| Choc Izod Entaillé-50 °C | NB (71,2) | NB (71) |

**Tableau 9 - Effet du % d'agent réticulant**

| **Numéro de la composition** | **9** | **12** | **14** |
|---|---|---|---|
| Référence de la composition | PL20853 | PL20854 | PL20855 |
| Variable | 0,33% agent réticulant | 0,15% agent réticulant | 0,1% agent réticulant |
| PP8013 | 54,36 | 54,54 | 54,59 |
| ENGAGE 8842 | 38,00 | 38,00 | 38,00 |
| CALPRENE 501 | 6,00 | 6,00 | 6,00 |
| LUPEROX 101-XL-45 | 0,33 | 0,15 | 0,10 |
| ALCAN POUDRE TMPTMA 70 | 0,21 | 0,21 | 0,21 |
| IRGAFOS 168 | 0,10 | 0,10 | 0,10 |
| NOIR 1423 | 1,00 | 1,00 | 1,00 |
| Total | 100,00 | 100,00 | 100,00 |
| | | | |

| **Propriétés Critiques** | | | |
|---|---|---|---|
| Dureté shore D | 34,00 | 33,00 | 35,00 |
| Indice de fluidité | 5,63 | 3,65 | 3,67 |
| Longueur Spirale | 34,51 | 31,75 | 31,19 |
| Contrainte Rupture | 9,00 | 10,20 | 10,70 |
| Allongement rupture | 339,00 | 238,00 | 202,00 |
| Déchirure | 59,80 | 88,90 | 71,10 |
| Module de Flexion | 175,00 | 138,00 | 200,00 |
| Module de Flexion -35 °C | - | - | - |
| Choc Izod Entaillé -40 °C | - | - | - |
| Choc Izod Entaillé -45 °C | NB (74,6) | NB (71,1) | NB (73,2) |
| Choc Izod Entaillé -50 °C | P(72) 4Ch(20) Rupture partielle ductile | NB (71,2) | NB (68,8) |

**Tableau 10 - Effet du rapport agent réticulant/coagent**

| **Numéro de la composition** | **15** | **16** | **17** | **18** |
|---|---|---|---|---|
| Référence de la composition | PL20889 | PL20890 | PL20891 | PL20892 |
| PP8013 | 54,20 | 54,35 | 54,35 | 54,50 |
| ENGAGE 8842 | 38,00 | 38,00 | 38,00 | 38,00 |
| CALPRENE 501 | 6,00 | 6,00 | 6,00 | 6,00 |
| LUPEROX 101-XL-45 | 0,40 | 0,40 | 0,25 | 0,25 |
| ALCAN POUDRE TMTMA 70 | 0,30 | 0,15 | 0,30 | 0,15 |
| IRGAFOS 168 | 0,10 | 0,10 | 0,10 | 0,10 |
| NOIR 1423 | 1,00 | 1,00 | 1,00 | 0,00 |
| Total | 100,00 | 100,00 | 100,00 | 100,00 |
| | | | | |

| **Propriétés Critiques** | | | | |
|---|---|---|---|---|
| Dureté shore D | 37,00 | 39,00 | 39,00 | 38,00 |
| Indice de fluidité | 4,50 | 5,80 | 3,00 | 3,80 |
| Longueur Spirale | 32,00 | 32,80 | 30,60 | 30,60 |
| Contrainte Rupture | 12,70 | 12,10 | 13,40 | 13,00 |
| Allongement rupture | 378,00 | 314,00 | 153,00 | 207,00 |
| Dechirure | 76,40 | 77,80 | 84,20 | 81,50 |
| Module de Flexion | 206,00 | 245,00 | 266,00 | 256,00 |
| Module de Flexion -35 °C | - | - | - | - |
| Choc Izod Entaillé -40 °C | - | - | - | - |
| Choc Izod Entaillé -45 °C | NB (67) | NB (64,7) | NB (71,1) | NB (68,7) |
| Choc Izod Entaillé -50 °C | 9C (11,2) Rupture Cassante | 9C (10) Rupture Cassante | 9C (9,7) Rupture Cassante | 9C (16) Rupture Cassante |

## Revendications

1. Composition polyoléfinique thermoplastique élastomérique partiellement réticulée, pour la formation de pièces de type insert en particulier de capot pour le logement d'un coussin d'air de sécurité d'un véhicule automobile, ladite composition comprenant un polymère oléfinique à base de propylène, au moins un copolymère à base d'éthylène de type éthylène-alpha-oléfine, au moins un agent réticulant et un agent générateur de radicaux libres, **caractérisée en ce que** :
a) le au moins un polymère oléfinique à base de propylène est choisi dans le groupe des copolymères de propylène/éthylène ou propylène/alpha-oléfine, et sélectionné parmi ceux ayant une résistance à l'impact d'au moins 30 kJ/m² lorsque mesuré suivant l'Izod entaillé à 23 °C, selon la norme ISO 180,
b) le au moins un copolymère à base d'éthylène de type éthylène-alpha-oléfine est sélectionné dans le groupe constitué par ceux ayant une densité au plus égale à 0,870 g/cm3, selon la norme ISO 1183,
c) au moins un élastomère thermoplastique est introduit,
d) éventuellement un polyéthylène haute densité est introduit.

2. Composition selon la revendication 1, **caractérisée en ce que** le copolymère de propylène éthylène contient préférentiellement de 2 à 5% en poids d'éthylène.

3. Composition selon la revendication 1, **caractérisée en ce que** le copolymère de propylène-alpha-oléfine est formé par la combinaison de propylène avec l'une au moins des alpha-oléfines en C₄ à C₁₂ et préférentiellement avec le butène-1, le pentène-1, le hexène-1, l'octène-1 et le méthyle pentène.

4. Composition selon l'une au moins des revendication 1 à 3, **caractérisée en ce que** le copolymère de propylène-éthylène et le copolymère de propylène-alpha-oléfine ont un indice de fluidité compris entre 0,1 et 100g/10 min et préférentiellement compris entre 0,5 et 50g/10 min selon la méthode ASTM D-1238 à 190°C sous une charge de 2,16 kg.

5. Composition selon l'une au moins des revendications 1 à 4 **caractérisée en ce que** le copolymère à base de propylène est présent à raison de 45% à 70% en poids et préférentiellement présent à raison de 50% à 65% en poids de la composition totale.

6. Composition selon l'une au moins des revendications 1 à 5, **caractérisée en ce que** le copolymère éthylène-alpha-oléfine est formé à partir d'une alpha-oléfine choisi parmi celle ayant trois à douze atomes de carbone.

7. Composition selon la revendication 6, **caractérisée en ce que** le copolymère éthylène-alpha-oléfine est préférentiellement un copolymère éthylène-butène ou éthylène-octène.

8. Composition selon la revendication 7, **caractérisée en ce que** les copolymères d'éthylène-butène et d'éthylène-octène sélectionné ont un indice de fluidité compris entre 0,5 et 20g /10 min selon la méthode ASTM D-1238 à 190°C sous une charge de 2,16 kg.

9. Composition selon la revendication 6, **caractérisée en ce que** le copolymère d'éthylène-alpha-oléfine est associé en mélange avec un copolymère d'éthylène-comonomère tertiaire, ledit comonomère tertiaire étant choisi dans le groupe constitué par l'acétate de vinyle, l'acide acrylique, l'acide méthacrylique, l'acrylate de méthyle, le méthacrylate de méthyle, l'acrylate d'éthyle, le méthacrylate d'éthyle.

10. Composition selon la revendication 6, **caractérisée en ce que** le copolymère à base d'éthylène est un copolymère d'éthylène-alpha-oléfine-comonomère tertiaire, ledit comonomère tertiaire étant choisi dans le groupe constitué par l'acétate de vinyle, l'acide acrylique, l'acide méthacrylique, l'acrylate de méthyle, le méthacrylate de méthyle, l'acrylate d'éthyle, le méthacrylate d'éthyle.

11. Composition selon l'une au moins des revendications 1 à 10, **caractérisée en ce que** le copolymère éthylène-alpha-oléfine a un indice de fluidité préférentiellement compris entre 0,05 et 50 g/10 min, très préférentiellement compris entre 0,2 et 20 g/10 min sous une charge de 2,16 kg à 190°C lorsque mesuré suivant la méthode ASTM D-1238.

12. Composition selon l'une au moins des revendications 1 à 11, **caractérisée en ce que** le copolymère éthylène-alpha-oléfine est présent dans ladite composition à raison de 25 à 50% en poids et préférentiellement à raison de 30% à 45% en poids de la composition totale.

13. Composition selon l'une au moins des revendications 1 à 12, **caractérisée en ce que** l'élastomère thermoplastique est choisi dans le groupe constitué par les éthylène-propylène-diène (EPDM), les styrène-butadiène-styrène (SBS), les styrène-éthylène-butylène-styrène (SEBS), les caoutchoucs styrène-butadiène (SBR), -les styrène-isoprène-styrène (SIS), les élastomères thermoplastiques sur base polyoléfine, en particulier sur polypropylène (homopolymères) avec des blocs amorphes et semi-cristallins et des copolymères de propylène/éthylène ou alpha-oléfine avec des blocs amorphes et semi-cristallins de type styrène-(éthylène/propylène) (SEP), styrène-b-(éthylène/propylène)styrène (SEPS), styrène-(éthylène/butylène)-styrène (SEBS), styrène-(éthylène-éthylène/propylène)-styrène (SEEPS).

14. Composition selon l'une au moins des revendications 1 à 13 **caractérisée en ce que** l'élastomère thermoplastique introduit à un poids moléculaire moyen de 20 000 g/mol.

15. Composition selon la revendication 14 **caractérisée en ce que** le poids moléculaire moyen de l'élastomère thermoplastique est préférentiellement choisi entre 30 000 g/mol et 200 000 g/mol.

16. Composition selon l'une au moins des revendications 1 à 15 **caractérisée en ce que** l'élastomère thermoplastique est introduit dans ladite composition à raison de 1% à 15% en poids de la composition totale.

17. Composition selon l'une au moins des revendications 1 à 16 **caractérisée en ce que** le polyéthylène de haute densité est choisi parmi ceux ayant une densité égale ou supérieure à 0,930 g/cm3.

18. Composition selon la revendication 17 **caractérisée en ce que** le polyéthylène de haute densité est choisi parmi ceux ayant un indice de fluidité compris entre 0,5 g et 50 g/10 min suivant la méthode ASTM D-1238.

19. Composition selon l'une au moins des revendications 1 à 18 **caractérisée en ce que** le polyéthylène de haute densité est introduit dans ladite composition à raison de 0 à 40% en poids et préférentiellement de 5 à 30% en poids de la composition totale.

20. Composition selon l'une au moins des revendications 1 à 19 **caractérisée en ce que** l'agent de réticulation est un peroxyde organique choisi dans le groupe constitué par le peroxyde de dicumyle, le 1,1-di-t-butyl-3,3,5-triméthyl-cyclohexane, le 2,5-diméthyl-2,5-di-t-butyl-péroxyhexane, le 2,5-diméthyle- le 2,5-di-t-butyle-péroxyhexane, le alpha alpha-bis(t-butylepéroxy)di-isopropylbenzène, la t-butyle-péroxycétone, le péroxybenzoate de t-butyle.

21. Composition selon l'une au moins des revendications 1 à 19, **caractérisée en ce que** l'agent de réticulation est choisi dans le groupe des silanes.

22. Composition selon l'une au moins des revendications 1 à 21, **caractérisée en ce** l'agent de réticulation est introduit dans ladite composition à raison de 0, 1 à 3% en poids par rapport à la composition totale.

23. Composition selon l'une au moins des revendications 1 à 22, **caractérisée en ce que** l'agent générateur de radicaux libres est choisi dans le groupe constitué par les monomères, dimères, trimères, polymères à très bas poids moléculaires possédant des groupes réactifs de type allyle, vinyle, méthacrylate.

24. Composition selon la revendication 23, **caractérisée en ce** l'agent générateur de radicaux libres est préférentiellement choisi dans le groupe constitué par des diallyl téréphthalate, triallylcyanurate, triallylisocyanurate, 1,2 polybutadiène, divinyl benzène, triméthylolpropanetriméthacrylate, polyéthylène glycol dimethacrylate, éthylène glycol diméthacrylate, pentaerythritol triacrylate, allyl méthacrylate, N N'-m-phénylène bismaléimide, toluènebismaleimide-p-quinone dioxime, nitrobenzène, diphenylguanidine.

25. Composition selon l'une au moins des revendications 1 à 24, **caractérisée en ce que** l'agent générateur de radicaux libres est introduit dans ladite composition à raison de 0,05% à 2% en poids et préférentiellement à raison de 0,1% à 1,5% en poids de la composition totale.

26. Composition selon l'une au moins des revendications 1 à 25, **caractérisée en ce que** un agent de stabilisation photonique est introduit dans ladite composition.

27. Composition selon la revendication 26, **caractérisée en ce que** l'agent de stabilisation photonique est choisi dans le groupe constitué par les amines à fort encombrements stériques, les benzophénones, les benzotriazoles, seuls ou en mélange.

28. Composition selon l'une ou l'autre des revendications 26 et 27, **caractérisée en ce que** l'agent de stabilisation photonique est introduit dans ladite composition à raison de 0,1% à 0,5% en poids de la composition totale.

29. Composition selon l'une au moins des revendications 1 à 28, **caractérisée en ce que** un agent de stabilisation chimique est introduit dans ladite composition.

30. Composition selon la revendication 29, **caractérisée en ce que** l'agent de stabilisation chimique est choisi dans le groupe constitué par les composés de type phénolique et les composés de type phosphite.

31. Composition selon l'une ou l'autre des revendications 29 et 30, **caractérisée en ce que** l'agent de stabilisation chimique est introduit dans ladite composition à raison de 0,1% à 0,5% en poids de la composition totale.

32. Composition selon l'une au moins des revendications 1 à 31, **caractérisée en ce que** une charge pulvérulente est introduit dans ladite composition.

33. Composition selon la revendication 32, **caractérisée en ce que** la charge minérale est choisie dans le groupe constitué par le carbonate de calcium, le talc, le kaolin, le dioxyde de titane, le noir de carbone.

34. Composition selon l'une ou l'autre des revendications 32 et 33, **caractérisée en ce que** la charge minérale pulvérulente est introduite dans ladite composition à raison de 0,5% à 15% de la composition totale.

35. Pièce moulée telle qu'un capot pour le logement d'un coussin d'air de sécurité d'un véhicule automobile réalisé à partir de la composition selon les revendications 1 à 34 destiné à être brutalement ouvert par déchirure contrôlée afin de laisser se déployer le coussin lors de la mise à feu du système pyrotechnique sans entraîner la formation de fragments au moment de l'éclatement à basse température.
